# EUROPEAN PATENT SPECIFICATION

(11) **EP 3 802 108 B1**
(45) Date of publication and mention of the grant of the patent: **22.05.2024**
(21) Application number: 19734168.8
(22) Date of filing: 30.05.2019
(51) Int. Cl.: B32B 5/02, B32B 9/02, B32B 23/00, B32B 27/10, B32B 29/00, B32B 9/04, B32B 7/12, B32B 27/18, B32B 27/20, B32B 27/22, B32B 27/30, B32B 27/32, B32B 27/34, B32B 27/36, B32B 27/08, C08L 1/00

(54) **MULTILAYERED ARTICLES**
MEHRSCHICHTIGE ARTIKEL
ARTICLES MULTICOUCHES

(30) Priority: 31.05.2018 US 201862678381 P
(43) Date of publication of application: 14.04.2021
(73) Proprietor: Melodea Ltd., 7610001 Rehovot (IL)
(72) Inventor: AZERRAF, Clarite, 7763247 Ashdod (IL); NEVO, Yuval, 7634112 Rehovot (IL); LEIBLER, David Michael, 6800709 Tel-Aviv (IL); BEN SHALOM, Tal, 7680500 Tal Shahar (IL); KULBAK, Einav, 9980300 Kibbutz Tzora (IL); NEVO, Yaniv, 7403769 Ness Ziona (IL)
(74) Representative: Vossius & Partner Patentanwälte Rechtsanwälte mbB
(86) International application number: PCT/IL2019/050621
(87) International publication number: WO 2019/229759

(56) References cited:
- WO-A1-2017/046798
- WO-A1-2017/089508
- WO-A1-2017/199252

## Description

### TECHNOLOGICAL FIELD

The invention generally concerns multilayered structures and uses thereof.

### BACKGROUND

Cellulose Nanocrystals (CNC) are one of the known forms of cellulose, the main component of cell walls of trees and plants. CNC may be present as liquid crystal solution in water and is known to self-assemble to macro scale ordered films having thicknesses at the nanoscale.

The nano-sized crystals possess interesting size-dependent structural and optical properties. The ability to play with the processing variables provides the ability to control the structure, composition, size, and level of dispersion of such nano crystals.

Document [7] relates to a particular laminated cellulose-based, liquid- or semiliquid food packaging material for heat sealing into aseptic packaging containers.

### BACKGROUND ART

[1] WO2017/046798
[2] WO2017/199252
[3] WO2013/132491
[4] US2005/0042443
[5] US9,227,381
[6] US5,547,764
[7] WO 2017/089508

### GENERAL DESCRIPTION

The inventors of the technology disclosed herein have developed highly stable and versatile multilayered structures or articles, based on cellulose nanomaterials, such as cellulose nanocrystals (CNC), that can be tailored and processed for a variety of applications and which are superior materials to aluminum sheets used, e.g., in the food packaging industry, as well as to other polymer-based structures and articles, and which exhibit superior barrier properties to gases, organic solvents, oils and other agents. As used herein, the term "article" relates to the multilayered structure according to claim 1.

As demonstrated herein, articles of the present invention, being multilayered structures that may be used in a variety of products and applications, have demonstrated superiority also with respect to existing and known products constructed of multilayers of cellulose nanomaterials and polymers such as polyvinyl alcohol (PVOH).

Superiority of multilayered structures of the invention is, *inter alia*, based on the presence of a layer of a blend of CNC and PVOH (CNC-PVOH blend). The superiority is reflected in:
(1) a grease barrier of 12, as determined using TAPPI T 559 standard (approved by the Physical Properties Committee of the Process and Product Quality Division);
(2) an oxygen transmittance rate (OTR) of between 0.01 and 15, or between 0.01 and 1, or between 0.01 and 5, or between 1 and 10, or between 1 and 5 or generally of values below 1 cc/m²-day, when measured at 80% relative humidity (RH), at 23°C; and/or
(3) a water vapor transmittance rate (WVTR) of between 0.01 and 20, or between 0.01 and 1, or between 0.01 and 5, or between 1 and 10, or between 1 and 5, or between 5 and 10, or generally of values below 1 gr/m²-day, when measured at 90% RH, at 38°C.

These properties support highly unique and useful articles that are in no way comparable to similar articles of the art. For example, a CNC-PVOH blend film shows better mechanical and barrier properties, compared to neat PVOH film and compared to a CNC film. In a multilayer structure of the invention, the advantage of CNC-PVOH layer, as compared to neat PVOH layer, is further increased, by the formation of better interactions between the CNC-PVOH layer and its adjacent layers, which enhance the adhesion between layers, and improve barrier properties and mechanical properties, as compared to multilayered-structures comprising neat PVOH. Where PVOH shows good performance as a barrier, CNC-PVOH exceeds its performance and exhibits excellent to superior properties, and the inclusion in a multilayer structure enhances the performance even more.

In contrast to multilayered structures of the art, such as those disclosed for example in US20050042443, at least one layer of PVOH coating, and a total coating weight of at least 7 gr/m² are needed in order to provide a TAPPI T 559 standard rating of 12, when coated on paper substrates. A CNC-PVOH coating resulted in a TAPPI T 559 standard rating of 12 when a coating weight of only 2.5 gr/m² was used, thus proving that the performance of such multilayered structures of the invention is beneficial as compared to e.g., PVOH coatings alone.

Oxygen barrier properties of multilayered structures comprising CNC-PVOH blends over PVOH-based layers was also demonstrated. On Kraft paper and paperboards, oxygen transmission rates of structures consisting PVOH were measured to be 1.5-2 times higher (lower barrier) than for structures with CNC-PVOH, for the same weight, when not consisting plastic layers. Structures with plastic layers and PVOH barrier layer showed 2 to 20 times higher OTR values (lower barrier). Kraft paper coated with a 5 g/m² PVOH layer resulted in an OTR (at 80%RH) of 20-30 cc/m²-day compared to an OTR of 8-15 cc/m²-day for a 5 g/m² CNC-PVOH layer under the same conditions. Structures of PP/paperboard/PVOH (5 g/m²)/PP resulted in an OTR (at 80%RH) of 10-20 cc/m²-day as compared to an OTR of 0.5-5 cc/m²-day for the same structures with a 5 g/m² CNC-PVOH layer under the same conditions.

As a person versed in the art would realize, OTR values are typically obtained and reported for multilayered structures tested at 0% relative humidity (RH). In practical terms, this value has no meaning when producing a structure for packaging purposes, since the terms of use of such structures always involve RH levels that are always higher than 0%. Moreover, the RH levels in which barrier products are used in the industry is 80% RH. Many barrier layers, including PVOH or PVOH-based barrier layers, show OTR stability when measured at -50% RH, but then exponentially increase in OTR values, as the RH levels increase. Thus, a prior art such as US9,227,381, in which a PVOH-based layer leads to OTR values of 4-12 cc/m²-day at 0% RH, does not provide any indication nor allow predication of barrier capabilities at 80% RH. In contrast, OTR values measured for structures with a CNC-PVOH layer are less than 1 cc/m²-day under the same conditions and are thus comparable to structures containing metalized layers, described in the art.

In US5,547,764, PVOH and mixtures of PVOH grades were coated on polypropylene (PP) and tested for OTR at 0% and 75% RH. The best OTR value disclosed was > 20.15 cc/m²-day at 75% RH, which is higher than the OTR value obtained for a PP layer coated with a CNC-PVOH layer of the invention, which in comparison demonstrated, at 80% RH, a value of < 15 cc/m²-day.

Adhesion advantages of a CNC-PVOH barrier layer, used in accordance with the invention, over a PVOH barrier layer, have also been demonstrated herein. A multilayer structure in which the barrier layer is in contact, on one of its faces or on both faces, with a plastic layer, must involve a strong adhesion between the barrier and plastic layers. Low adhesion is expected to lead to detachment and separation of the layers, during production of an end product, such as a package, or when the product is used. As demonstrated, a multilayer structure in which PVOH was used instead of a layer of CNC-PVOH, in contact with a plastic layer, resulted in 3-10 times weaker adhesion interaction between the barrier layer and the plastic layer as compared to the adhesion of CNC-PVOH layer to the same plastic layer (0.5 N/15mm for PVOH compared to 1.5 - 5 N/15mm for CNC-PVOH).

Articles of the invention are free of metallic layers and achieve their stability, durability and improved properties even in the absence of such layers. In fact, articles of the invention are free of any metallic nanoparticles and are generally free of any metal-containing layer and are thus suitable for a wider variety of applications, including as packaging materials for food, beverages, consumer goods and pharmaceutical products. These articles may be tailored or pre-structured in accordance with one or more final uses or applications. For example, an article according to the invention may be specifically tailored as a dry food packaging material or as a liquid food packaging material. Additionally, articles of the invention are fully biodegradable or comprise at least one layer that is biodegradable or are generally degradable.

In a first aspect, the invention provides an article in the form of a multilayered structure (which may be in the form of a substantially two-dimensional sheet or a three-dimensional article or product) comprising a plurality of material layers, as defined in claim 1.

In some embodiments, each of the three to seven material layers is biodegradable or generally degradable and is free of metallic materials or components.

The multilayered article comprises a substrate, a CNC-based layer which is a blend of CNC and PVOH, and a cover layer, such that the cellulose nanomaterial layer forms an interface between the substrate and the cover layer. Where the multilayered structure comprises more than three layers; namely a substrate, a cellulose nanomaterial, a cover layer and another layer interposed between the substrate and the cover layers, the cellulose nanomaterial layer may be positioned anywhere relative to the another layer (e.g., the cellulose nanomaterial layer need not be positioned equidistant from the substrate and the cover layers).

In some embodiments, the multilayered article consists a substrate, a CNC-based layer and a cover layer, such that the CNC-based layer forms an interface between the substrate and the cover layer.

It is to be understood that the materials of the layers in the embodiments above have to be chosen in accordance with claim 1.

As used herein, a "***material layer***" is any such layer that comprises or consists the indicated material, exhibiting a uniform or homogenous distribution of the material along the layer. The material layer may be composed of a single layer or composed of a plurality of layers, wherein each of the plurality of layers comprises the same material. Where the two layers are distinct in their composition, they may be regarded as two different material layers. For example, a material layer comprising at least one cellulose nanomaterial, may be structured of several layers of the same material, wherein the several layers are used to, e.g., increase the thickness of the layer. Where two different cellulose materials are used as a blend, as defined, such a blend may be used to form a material layer. However, as defined herein, wherein the two materials are not in the form of a blend, each would form a different layer of the multilayered structure.

Each material layer has a thickness ranging from 100 nm and 20 µm. In some embodiments, the thickness is between 100 and 900nm, between 900 nm and 20 µm, between 1,000 nm and 20 µm, between 1 µm and 20 µm or between 1 µm and 10 µm. However, layer B has to have a thickness of between 1 µm and 20 µm.

Each material layer of the multilayered structure is adhesively connected, associated or attached to one or two adjacent (neighboring) layers. The term "***adhesive connection*/*association*/*attachment***" or any lingual variation thereof, refers to the fact that any two adjacent layers in a multilayer are intimately associated to each other through the use of an adhesive layer or by pre-treating one or both of the to-be-associated layers to permit effective association. Such pretreatment may include thermal treatment, a treatment with plasma, corona, flame, primer application or any other known pretreatment method. Where an adhesive layer is used, it may be an interface layer between any two material layers having a thickness of between 100 nm and 3 µm or may be considered an independent layer of the multilayer, as may be the case. Suitable adhesives or primer materials are disclosed hereinbelow.

In some embodiments, the association or adhesion between the two layers does not require the use of an adhesive or a primer formulation, nor any pretreatment of any of the layers to be associated. In some cases, a layer e.g., a layer of CNC-PVOH blend, as described herein, is formed onto the other, e.g., a paper-based substrate, without needing to use an adhesive, a primer formulation, or any pretreatment.

In some embodiments, the multilayered structure is characterized by one of more of the following:
(1) a grease barrier of 12, as determined using TAPPI T 559 standard (approved by the Physical Properties Committee of the Process and Product Quality Division);
(2) an oxygen transmittance rate (OTR) of between 0.01 and 15, or between 0.01 and 1, or between 0.01 and 5, or between 1 and 10, or between 1 and 5 or generally of values below 1, when measured at 80% relative humidity (RH), at 23°C; and/or
(3) a water vapor transmittance rate (WVTR) of between 0.01 and 20, or between 0.01 and 1, or between 0.01 and 5, or between 1 and 10, or between 1 and 5, or between 5 and 10, or generally of values below 1, when measured at 90% RH, at 38°C.

In another aspect, the invention provides an article in the form of a multilayered structure comprising a plurality of material layers (three to seven layers), at least one of said material layers is a substrate layer and at least one another of said material layers is a layer of CNC-PVOH blend, wherein the article has a grease barrier value of 12, as determined using TAPPI T 559 standard (approved by the Physical Properties Committee of the Process and Product Quality Division).

In another aspect, the invention provides an article in the form of a multilayered structure comprising a plurality of material layers (three to seven layers), at least one of said material layers is a substrate layer and at least one another of said material layers is a layer of CNC-PVOH blend, wherein the article has an oxygen transmittance rate (OTR) of between 0.01 and 15, or between 0.01 and 1, or between 0.01 and 5, or between 1 and 10, or between 1 and 5 or generally of values below 1, when measured at 80% relative humidity (RH), at 23°C.

In another aspect, the invention provides an article in the form of a multilayered structure comprising a plurality of material layers (three to seven layers), at least one of said material layers is a substrate layer and at least one another of said material layers is a layer of CNC-PVOH blend, wherein the article has a water vapor transmittance rate (WVTR) of between 0.01 and 20, or between 0.01 and 1, or between 0.01 and 5, or between 1 and 10, or between 1 and 5, or between 5 and 10, or generally of values below 1, when measured at 90% RH, at 38°C.

As used herein, the term "blend" refers to a mixture of any two or more components, as indicated, that forms a layer of the invention. A layer of "CNC-PVOH blend", for example, refers to a material layer that comprises a mixture of CNC and PVOH, at any material ratio. Typically, such a material layer consists the blended materials; namely the blend from which the layer is formed consists the two (or more) materials only. In some embodiments, the blend may comprise one or more additives or other materials. Thus, in some embodiments, a CNC-PVOH material layer consists CNC and PVOH.

A blend of CNC and PVOH is a mixture of the two components at a ratio between 0.001:1 to 1:0.001 (CNC to PVOH). In some embodiments, the ratio is 0.001:1, 0.01:1, 0.1:1, 1:1, 1:0.1, 1:0.01, 1:0.001 w/w, CNC:PVOH.

In some embodiments, the ratio is 1:1, 1:2, 1:3, 1:4, 1:5, 1:6, 1:7, 1:8, 1:9, 1:10, 1:11, 1:12, 1:13, 1:14, 1:15, 1:16, 1:17, 1:18, 1:19 or 1:20 w/w, CNC:PVOH.

In some embodiments, in a blend of CNC and PVOH, the amount of CNC is between 1 and 99% of the CNC+PVOH weight. In some embodiments, the amount of CNC in the combination CNC+PVOH is between 1 and 99%, 1 and 95%, 1 and 90%, 1 and 85%, 1 and 80%, 1 and 75%, 1 and 70%, 1 and 65%, 1 and 60%, 1 and 55%, 1 and 50%, 1 and 45%, 1 and 40%, 1 and 35%, 1 and 30%, 1 and 25%, 1 and 20%, 1 and 15%, 1 and 10%, 1 and 5%, 10 and 99%, 15 and 99%, 20 and 99%, 25 and 99%, 30 and 99%, 35 and 99%, 40 and 99%, 45 and 99%, 50 and 99%, 55 and 99%, 60 and 99%, 65 and 99%, 70 and 99%, 75 and 99%, 80 and 99%, 85 and 99%, 90 and 99%, 10 and 50%, 15 and 50%, 20 and 50%, 25 and 50%, 30 and 50%, 35 and 50%, or between 40 and 50%, w/w.

In some embodiments, each of the plurality of material layers is biodegradable and is free of metallic materials or components. In some embodiments, the substrate layer is biodegradable and in other embodiments, the CNC-PVOH layer is biodegradable.

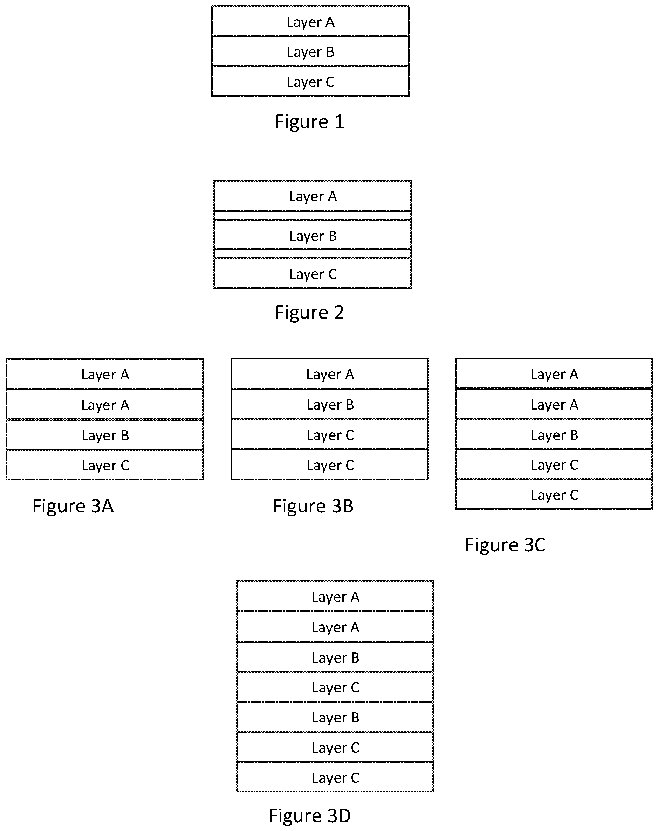

In the present invention, the article has a layered structure of the form **ABC,** wherein each of **A, B** and **C** is one or more material layers, as depicted in **Fig. 1** for a tri-layer structure, wherein: **A** is a substrate comprising or consisting a material selected from a polymeric material, a paper or paper-based material, a polymer coated paper-based material, e.g., a paperboard, a nanocellulose film (namely, any of the cellulose nanomaterials, as defined herein), nanocellulose/polymer film (namely, any of the cellulose nanomaterial, as defined herein, when coated or associated on one or both its faces with a polymeric material), a fabric material, a porous material or a membrane material; and
a mineral material and B and C are as defined in claim 1.

In some embodiments, layer **A** may be selected, from a polymeric material, a paper or paper-based material, a polymer coated paper-based material, e.g., a paperboard, a nanocellulose film, nanocellulose/polymer film, a fabric material, a porous material and a membrane material.

The "***polymeric material***", when used as an independent layer or as a coating layer of a paper-based material or a nanocellulose material or as an additive to any of the materials constructing any of the layers, may be a material belonging to any known polymeric material or resin, such as thermoplastic polymers and thermoset polymers. The polymer may be selected amongst such polymers as polyethylene, polypropylene, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polyvinylidene chloride, starch, cellulose, polyhydroxyvalerate, polyhydroxyhexanoate, polyanhydrides, polyethylene terephthalate, polyvinyl chloride and polycarbonate. In some embodiments, the polymeric material is polyester (which may be selected amongst thermoset and thermoplastics).

In some embodiments, the polymer is selected from polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polyvinylidene chloride, starch, cellulose, polyhydroxyvalerate, polyhydroxyhexanoate, polyanhydrides,, polyethylene terephthalate, polyvinyl chloride and polycarbonate, or any blend of two or more thereof.

As used herein, "***paper or paper-based material***" is a material as known in the art. The paper or paper-based material may be used as such or may be used coated with a polymer on one or both its faces. In some embodiments, this paper-coated material is a paperboard. In some embodiments, the paper is Kraft paper. As known in the art, Kraft paper is a paper or paperboard (cardboard) produced from chemical pulp produced in the Kraft process, as known in the art. The paper is a porous paper with high elasticity and high tear resistance, designed for packaging products with high demands for strength and durability. Thus, the paper may additionally be selected from paper-based packaging materials.

In some embodiments, the paper is selected from bank paper, banana paper, bond paper, book paper, coated paper products, construction paper, sugar paper, cotton paper, fish paper, inkjet paper, Kraft paper, Sack Kraft paper, laid paper, leather paper, mummy paper, oak tag paper, sandpaper, Tyvek paper, wallpaper, Washi paper, waterproof paper, wax paper, wove paper, Xuan paper and others.

As known in the art, commercial papers or paper-based products of any kind described above, may contain additives such as clays, calcium carbonate, latex, etc., which are added to the paper in its production process.

The "***fabric material***" is any such material known in the art that is typically a flexible material constructed of a network of natural or artificial fiber materials. The fabric may be any textile, natural fabric, synthetic fabric, knit, woven material, nonwoven material or mesh of a material selected from cellulose, viscose, glass fibers, carbon fibers and synthetic fibers. In some embodiments, the fabric may be in the form of a porous material or a membrane, selected as indicated.

The "***porous material***" or "***membrane material***" is generally a material containing pores that can hold or contain a solid, liquid or gaseous materials. In some embodiments, the pores are voids, namely empty of any such material. In some embodiments, the porous material acts as a membrane, namely as a selective barrier with a degree of selectivity being dependent on the membrane pore size. In some embodiments, the membrane may be fabric based or paper based.

Each of layers **A** and **C,** independently one of the other, may additionally or alternatively, be coated or made of a polymeric material that is known as a varnish material, provided that layer C is a cover layer made of a varnish. As known in the art, such varnishes are hydrophobic materials that by themselves can act as water-resistant layers, water vapor barriers or supply mechanical protection to any layer they are associated with, e.g., layer **B,** or any of layers **A** and **C** as defined herein. The varnish layers, either directly on layer **B** or on either or both layers **A** or **C** may also be provided to gain the ability to print on. The varnish material or composition may be obtained as commercially available or may be tailored for the particular purpose. The varnish material may be selected amongst such compositions that contain a polymer selected from polyurethane, acrylic, epoxy, polyester; resins such as phenolic resin, alkyd resin, polyurethane resin; latexes such as styrene, styrene-butadiene, natural latex; and oils such as linseed oil, walnut oil, tung oil and soybean oil.

In some embodiments, neither substrate **A** nor cover layer **C** is a nanocellulose film nor comprises such a material.

It should be noted that the terms "***substrate***" and "***cover layer***" should not be taken to suggest or hint to any directionality to articles of the invention. In other words, the term "substrate" need not be the bottom-most layer or the layer from which manufacture of the article commences. Similarly, the term "cover layer" should not be contemplated as the top-most layer nor the layer that caps, envelopes or covers the remaining layers or features of the multilayered structure.

As noted herein, layer **B** comprises or consists a cellulose nanomaterial, specifically a blend of CNC and NFC. In some embodiments, layer **B** is free of NFC.

Cellulose nanocrystals (CNC) or nanocrystalline cellulose (NCC) are fibers produced from cellulose, wherein the CNC are typically high-purity single crystals. They constitute a generic class of materials having mechanical strengths equivalent to the binding forces of adjacent atoms. The resultant highly ordered structure produces not only unusually high strengths but also significant changes in thermal, electrical, optical, magnetic, ferromagnetic, dielectric, conductive, and even superconductive properties. The tensile strength properties of CNC are far above those of the current high volume content reinforcements and allow the processing of the highest attainable composite strengths.

CNC may be produced from cellulose or any cellulose containing material or from fibrillated cellulose by means known in the art, for example in WO 2012/014213, WO 2015/114630, and in US applications derived therefrom, each being herein incorporated by reference.

As known in the art, cellulose nanofibrils (CNF or NFC) are cellulosic materials composed of at least one primary fibril, containing crystalline and amorphous regions, with aspect ratios usually greater than 50. Their length is 0.1-5 µm and their diameter is 5-60 nm. Similarly, cellulose microfibrils (CMF or MFC) are cellulosic materials containing crystalline and amorphous regions, with aspect ratios usually greater than 50. Their length is few micrometers and their diameter is larger than 100 nm. CMF can contain some fraction of CNF.

In some embodiments, the cellulose nanomaterial is characterized by having at least 50 percent crystallinity. In some embodiments, the cellulose nanomaterial is monocrystalline. In some embodiments, the cellulose nanomaterial is high purity monocrystalline material.

In some embodiments, the nanocrystals of the nanomaterial have a length of at least about 50 nm. In other embodiments, they are at least about 100 nm in length or are at most 1,000 nm in length. In other embodiments, the nanocrystals are between about 100 nm and 1,000 nm in length, 100 nm and 900 nm in length, 100 nm and 600 nm in length, or between 100 nm and 500 nm in length.

In some embodiments, the nanocrystals are between about 10 nm and 100 nm in length, 100 nm and 1,000 nm, 100 nm and 900 nm, 100 nm and 800 nm, 100 nm and 600 nm, 100 nm and 500 nm, 100 nm and 400 nm, 100 nm and 300 nm, or between about 100 nm and 200 nm in length.

The nanocrystals may be selected to have an averaged aspect ratio (length-to-diameter ratio) of 10 or more. In some embodiments, the averaged aspect ratio is between 10 and 100, or between 20 and 100, or between 30 and 100, or between 40 and 100, or between 50 and 100, or between 60 and 100, or between 70 and 100, or between 80 and 100, or between 90 and 100, or between 61 and 100, or between 62 and 100, or between 63 and 100, or between 64 and 100, or between 65 and 100, or between 66 and 100, or between 67 and 100, or between 68 and 100, or between 69 and 100.

In some embodiments, the averaged aspect ratio is between 67 and 100.

In some embodiments, the cellulose nanomaterial is CNC. In some embodiments, the nanomaterial is not NFC.

Depending on the process utilized for the production of the CNC, the material may be in a variety of purities. In some cases, the cellulose nanomaterial may comprise salts and/or carbohydrates such as hemicellulose, xyloglucane, cellulose derivatives and others. Thus, the CNC used in accordance with the invention may comprise between 0.01% and 0.5% of impurities, e.g., carbohydrates and salts.

Layer **B** endows the multilayered structure with one or more properties that may be enhanced, reduced or otherwise modified by selecting an appropriate substrate or cover layer or by increasing or decreasing or selecting a certain number of layers. In some embodiments, the material composition of layer **B** is selected to exhibit gas barrier properties, oil barrier properties and water vapor barrier properties. The gas barrier properties include preventing, arresting, or minimizing permeation or transport of gases through the multilayered structure, the gas being selected from oxygen, carbon dioxide, aroma, SOx, NOx, methane, fluorinated gases and others. The oil barrier properties include preventing, arresting, or minimizing permeation or transport of oils such as vegetable oil, mineral oil and grease.

Layer **B** may also be selected to have a composition or a thickness that endows the multilayered structure with mechanical support. It may be a transparent layer or an opaque or non-transparent, and in some cases may be tailored to block certain wavelengths.

In some embodiments, layer **B** comprises a blend of CNC with at least one other nanocellulose material such as NFC, or with at least one additive, or with at least one additional material, provided that Layer B is a layer comprising at least a blend of cellulose nanocrystals and polyvinyl alcohol.

A blend of CNC and NFC is a mixture of the two components at a ratio between 0.001:1 to 1:0.001 (CNC to NFC). In some embodiments, the ratio is 0.001:1, 0.01:1, 0.1:1, 1:1, 1:0.1, 1:0.01, 1:0.001 w/w, CNC:NFC.

In some embodiments, layer **B** comprises the blend of cellulose nanocrystals and polyvinyl alcohol in combination with (as a blend) at least one polymer selected from polyvinyl acetate (PVAc), ethylene vinyl alcohol (EVOH), polyvinyl pyrrolidone (PVP), starch, chitosan, poly acrylic acid (PAA), polyethyleneimine (PEI), carbohydrates, ethylene vinyl acetate (EVA), elastomers, isocyanates and polyurethanes.

A blend (a mixture, not separate layers) of CNC and at least one additive selected may endow the CNC material or layer with one or more properties selected from gas barrier, oil barrier, water-vapor barrier, better mechanical properties, thermal properties, adhesive properties and others.

The at least one additive may be a polymer, as defined herein, or any other additive such as a plasticizer, e.g., glycerol or sorbitol; a surfactant, e.g. polysorbate; a particulate material, e.g., Mg particles or nanoparticles (excluding nanoparticles of others elements); a pigment; a carbohydrate, e.g. starch or chitosan; a salt, e.g. calcium carbonate; a conductive material, e.g. graphene; an oxygen scavenger, e.g. iron-salts; lignin; natural extracts, e.g. rosemary oil and others.

In some embodiments, the additive or any other material used in combination with the CNC and/or NFC is not bi oriented poly propylene (BOPP).

In some embodiments, the additive is a polymeric material.

In some embodiments, the additive is not a polymeric material.

Where the additive is not a polymer, the additive may be present in amounts as indicated herein or in amounts ranging from 1% and 30% of the total weight of the formula (w/w). In some embodiments, the additive amount may be between 1 and 10%, 1 and 20%, 1 and 5%, 5 and 10%, 10 and 15% or 10 and 20%.

The cellulose nanomaterial, e.g., CNC, layer may be comprised of the nanomaterial, such as CNC and at least one additional agent or material, e.g., a polymeric material, wherein the amount of the additive, e.g., polymeric material, ranges between 0.1-99wt% of the nanomaterial layer (relative to the total weight amount of the materials making up the layer). In some embodiments, the amount of the polymeric material is between 0.1 and 95%, 0.1 and 90%, 0.1 and 85%, 0.1 and 80%, 0.1 and 75%, 0.1 and 70%, 0.1 and 65%, 0.1 and 60%, 0.1 and 55%, 0.1 and 50%, 0.1 and 45%, 0.1 and 40%, 0.1 and 35%, 0.1 and 30%, 0.1 and 25%, 0.1 and 20%, 0.1 and 15%, 0.1 and 10%, 0.1 and 9%, 0.1 and 8%, 0.1 and 7%, 0.1 and 6%, 0.1 and 5%, 0.1 and 4%, 0.1 and 3%, 0.1 and 2%, 0.1 and 1%, 1 and 90%, 5 and 90%, 10 and 90%, 15 and 90%, 20 and 90%, 25 and 90%, 30 and 90%, 35 and 90%, 40 and 90%, 45 and 90%, 50 and 90%, 55 and 90%, 60 and 90%, 65 and 90%, 70 and 90%, 75 and 90%, 80 and 90%, 85 and 90%, 1 and 85%, 5 and 80%, 10 and 80%, 15 and 75%, 20 and 70%, 25 and 65%, 30 and 60%, 35 and 55% or 40 and 50%.

In some embodiments, the at least one additional material is a polymer such as PVOH, present in an amount between 50 and 70% or between 60 and 70% or between 70 and 95% or between 70 and 80% of a composition consisting the additive and CNC (in words- an amount between 70% and 90% polymer means 70-90% polymer and 30-10% CNC).

In some embodiments, the ratio of at least one additional material to CNC is 1:1, 1:2, 1:3, 1:4, 1:5, 1:6, 1:7, 1:8, 1:9, 1:10, 10:1, 9:1, 8:1, 7:1, 6:1, 5:1, 4:1, 3:1 or 2:1.

Layer **B** comprises CNC and PVOH (CNC-PVOH). The layer has a thickness of between 1 µm and 20 µm or between 1 µm and 10 µm.

In some embodiments, the thickness is between 1 µm and 15 µm, between 1 µm and 10 µm or between 1 µm and 5 µm.

Each of layers **A** and **C** endows the multilayered structure with mechanical and barrier capabilities that may be tailored to meet one or more end applications. Both the substrate and the cover layer may be printed on, laminated or otherwise associated with one or more layers, sheets, films or coats. A multilayered structure having the general form **ABC,** may be folded or arranged into a pocket or a container or an enclosure such that either **A** or **C** can be the external surface of the pocket or container or enclosure, or the internal surface thereof. Depending on the final product, the material or composition of each of layers **A** and **C** may be selected.

In some embodiments, each of layers **A** and **C** is selected, independently of each other, amongst polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polyvinylidene chloride, starch, cellulose, polyhydroxyvalerate, polyhydroxyhexanoate, polyanhydrides, polyethylene terephthalate, polyvinyl chloride and polycarbonate. However, in the present invention, layer C is a cover layer made of a varnish.

In some embodiments, one of layers **A** is a polymer coated paperboard, wherein the polymer is selected from polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polyvinylidene chloride, starch, cellulose, polyhydroxyvalerate, polyhydroxyhexanoate, polyanhydrides, polyethylene terephthalate, polyvinyl chloride and polycarbonate. However, in the present invention, layer C is a cover layer made of a varnish.

In some embodiments, at least one of layers **A,** independently of the other, is or comprises a fabric. The fabric may be any textile, natural fabric, synthetic fabric, knit, woven material, nonwoven material or mesh of a material selected from cellulose, viscose, glass fibers, carbon fibers and synthetic fibers. Similarly, the fabric may be in the form of a membrane, selected as indicated.

Layers **A** and **B** and/or layers **B** and **C** may be associated with each other directly or may be separated by an interface material(s) as depicted for the purpose of exemplification in **Fig. 2****.** The interface material between **A** and **B** need not be the same as the interface material associating layers **B** and **C,** or one or both interface materials may be absent. Independently on whether or not the layers are directly associated or associated via an interface material, the substrate layer and/or the cover layer may be pretreated to permit stable and long lasting association between the layers. Pretreatment may involve one or more of plasma, corona, flame, heat or any known pretreatment methods.

Additionally or alternatively, the layers may be adhesively associated to each other, as defined, via a primer material or an adhesive material, shown in **Fig. 2** as the layers between layers **A** and **B** or between layer **B** and **C.** This primer or adhesive may be inherent to the substrate or to the cover layer (namely embedded within the substrate/cover layer or pre-associated with the substrate/cover layer or is the substrate/cover layer material) and thus may not be added as a separate film or layer or as a separate pretreatment or process step. In cases where the primer or adhesive materials are not part of the substrate or cover layer, they may be coated on the substrate or the cover layer to form an additional layer which purpose may be to induce adhesion or association between the layers and which typically, while optionally not having an effect any mechanical or functional or otherwise characteristic properties of the multilayered structure. The primer or adhesive layer or film is typically not used for endowing the multilayered structure with one or more functional properties. However, the selection of a primer or an adhesive material may be to additionally introduce, strengthen or diminish one or more properties associated with the multilayered structure as a whole or with one or more layers thereof. Such property may be foldability, elasticity, transparency, absorptivity, light transmittance, permeability of gases or solvents, wettability, thermal resistance and others. The primer layer or adhesive layer comprises a material selected from polyurethane, epoxy, acrylate, hot-melt adhesives, polyelectrolytes (e.g., polyethyleneimine) and varnish materials.

As may be understood the adhesive or primer may also be used to associate any two or more layers of the multilayer to each other. The so associated layers need not be the substrate or the cover layer. They may be any layer of the multilayer with any other layer of the multilayer.

In some embodiments, the multilayered structure comprises 3 layers: a substrate layer (**A**), a CNC layer (**B**) and a cover layer (**C**), each as defined in claim 1, as exemplified in **Fig. 1****.** In some embodiments, the multilayered structure comprises 3 or 4 or 5 or 6 or 7 layers, such that at least one layer constitutes a substrate layer, as defined, a cellulose nanomaterial layer, as defined, and a cover layer, as defined. In some embodiments, the material of each layer may be different from the material of an adjacent layer or from the material of one or more other layers in the multilayered structure, or may the different from a material of any one adjacent layer but the same as the material of a non-adjacent layer. For example in a multilayered structure of the form **ABCC,** material layer **A** may be different from each of material layers **C,** and each of material layers **C** may also be different from each other, forming a multilayered structure of the form **ABC1C2.** Exemplary multilayered structures are provided in **Figs. 3A-D**.

In such multilayer designations, both **C1** and **C2** are selected as defined herein for **C,** but are nevertheless different from each other.

In some embodiments, each of layers **A** and **C** is repeated twice or more, namely a multilayered structure may be in the form **AABCC,** or **ABCC,** or **AABC,**
wherein each of **A, B** and **C** are as defined herein, and further wherein each pair of adjacent layers may be associated directly or via a primer or adhesive film or layer. For example, in a structure of the from **AABCC,** each **A** may be different from the other and each **C** may be different from another **C.**

The multilayered structure may be symmetric around the central layer **B** or asymmetric.

The multilayered structure of the invention may be in the form of a sheet or a folded or shaped sheet of material, as defined herein. Where presented as a material sheet, it may be of any size and shape, may be printed or colored, may be fully transparent or opaque and may be surface treated. The sheet may be cut, folded, or processed into any one shape, size or object such as a pocket or an enclosure or an envelope or a container that is formed of the sheet, or that comprises at least one element or feature that is made of a multilayered structure of the invention. In some embodiments, the object is for packaging of goods, foods, liquids, pharmaceuticals or any material that requires isolation or protection from the environment, e.g., gases, water vapor, certain light wavelengths, and other damaging agents or effects which the multilayered structure can protect from (by forming an impermeable barrier).

Due to its unique properties, the sheet may be used as a replacement for aluminum sheets in packaging materials. As known in the field, aluminum sheets are widely used in packaging products due to their ability to fully block permeation of gases, water and light, and also due to their contribution to the mechanical stability of the package. There are however certain disadvantages for the use of aluminum foils, mainly having to do with its impact on the environment caused by its inability to undergo degradation, and difficulties associated with the recycling of packages containing aluminum. Light blocking properties of aluminum are also considered a disadvantage when transparent packages are needed. Another disadvantage of aluminum is heat transmittance which is not desired in applications such as vacuum insulated panels, where good gas barrier is needed but without high heat transfer.

The layered structure of the invention is a suitable replacement of aluminum by providing a material having barrier and mechanical properties, with the benefit of being recyclable and degradable, being transparent to light, thermal insulator, and can be provided as much thinner barrier layers, achieving the same desired barrier properties (for example, a 2 µm barrier layer leads to the desired OTR level in a structure that 5 µm of aluminum foil is usually used in).

Thus, the invention provides an article in the form of a multilayered structure consisting between 3 and 7 material layers, the multilayered structure being of the form **ABC,** wherein each of **A, B** and **C** is a material layer selected as indicated in claim 1.

In some embodiments, the layer of the cellulose nanomaterial comprises between 0.1wt% and 3wt% impurities of the total weight of the layer, wherein the impurities are selected from carbohydrates and salts.

In some embodiments, the article consists of a layer of a blend of CNC and PVOH; a substrate and a cover layer.

In some embodiments, layer **A** is a paper or paper-based material.

In some embodiments, layer **A** is of a polymeric material, a polymer coated paper-based material, or a nanocellulose/polymer film.

In some embodiments, layer **B** comprises CNC blended with PVOH and at least one polymer selected from PVAc, EVOH, PVP, starch, chitosan, poly acrylic acid, polyethyleneimine, carbohydrates, EVA, elastomers, isocyanates and polyurethanes.

In some embodiments, the at least one additive is a polymer or an additive selected from a plasticizer; a surfactant; a particulate material; a pigment; a carbohydrate; a salt; a conductive material; and an oxygen scavenger.

In some embodiments, the at least one additive is present in an amount ranging from 1% and 20%.

In some embodiments, layer **A** is of a material selected, independently of the other, from polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polybutylene succinate, polyvinylidene chloride, starch, cellulose, polyhydroxyvalerate, polyhydroxyhexanoate, polyanhydrides,, polyethylene terephthalate, polyvinyl chloride and polycarbonate.

In some embodiments, layer **A** is a polymer coated paperboard, wherein the polymer is selected from polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polybutylene succinate, polyvinylidene chloride, starch, cellulose, polyhydroxyvalerate, polyhydroxyhexanoate, polyanhydrides, polyethylene terephthalate, polyvinyl chloride and polycarbonate.

In some embodiments, layer **A** is or comprises a fabric.

In some embodiments, layers **A** and **B** and/or layers **B** and **C** are associated with each other directly or separated by an interface material selected from primer material and an adhesive material.

In some embodiments, the article consists 3 layers: a substrate layer, a CNC layer and a cover layer, each being as defined in claim 1.

In some embodiments, the CNC layer consisting a blend of CNC and PVOH. In some embodiments, the multilayered structure is of a form selected from **AABCC, ABCC, AABC,** wherein each of **A, B** and **C** are as defined herein.

In some embodiments, the article is provided when used in packaging of goods, foods, liquids, and pharmaceuticals.

The invention additionally provides an article in the form of a multilayered structure consisting between 3 and 7 material layers, the multilayered structure being of the form **ABC,** wherein each A, B and C are as defined in claim 1.

Packages with good gas barrier properties are suitable for long-term, aseptic packaging of food-stuff and beverages. Thus, it is very important to achieve very low oxygen-transmission rates (OTR) in developed packaging solutions. Moreover, those low OTR values must be achieved in humid conditions, which better correlate to "real-life" conditions and better predict the performance of the barrier in granting longer shelf life to the packaged food-stuff or beverages. An excellent oxygen barrier will show OTR values below 10 cc/m²-day. Good oxygen barrier will show OTR values of few dozens, and so on. The OTR values, as measured using a coulometric oxygen sensor, are crucial for the determination of the final barrier product performance, and an improvement of few OTR units may attest to a big difference in the ability of the final package to prolong the shelf life of products. For that reason, the better OTR values achieved for structures consisting of a CNC-PVOH barrier layer compared to structures consisting of a PVOH barrier layer, indicate that the final package will be superior when using CNC-PVOH as a barrier layer.

Thus, in the multilayered structuresof the present invention layer **B** comprises or consists a blend of CNC and PVOH preferably at ratios, as indicated herein The ratio between the CNC and the PVOH in the blend may be selected from 1:1 and 1:40 CNC/PVOH, as detailed herein.

The following non-limiting examples of the invention represent multilayered structures that by themselves or when modified to include one or more additional material layers, provide a beneficial improvement on existing structures known in the art. In some embodiments, multilayered structures of the invention consist or comprise any one or more of the following (in each of the examples, the sign "/" indicates separation between layers); which are in accordance with the present invention in as far as they form part of a multilayered structure having layers A, B and C as required by claim 1:
- a paper or paper based material (such as Kraft paper)/CNC-PVOH blend;
- a paper or paper based material (such as Kraft paper)/CNC-PVOH blend/polymeric water vapor barrier (such as styrene, styrene-butadiene acrylic polymers and varnishes);
- a polyolefin (such as polypropylene)/a paper or paper based material (such as Kraft paper)/CNC-PVOH blend/polymeric water vapor barrier (such as styrene, styrene-butadiene acrylic polymers and varnishes)/polyolefin (such as polypropylene);
- a polyolefin (such as polypropylene)/ a paper or paper based material (such as Kraft paper)/CNC-PVOH blend/a polyolefin (such as polypropylene)- in such embodiments, each of the polyolefins may be the same or different;
- Paperboard (PB)/CNC-PVOH blend;
- Paperboard/CNC-PVOH blend/polymeric water vapor barrier (such as styrene, styrene-butadiene acrylic polymers and varnishes);
- a polyolefin (such as polypropylene)/Paperboard/CNC-PVOH blend/a polyolefin (such as polypropylene);
- a polyolefin (such as polypropylene)/Paperboard/a polyolefin (such as polyethylene)/CNC-PVOH blend/a polyolefin (such as polypropylene)- in such embodiments, each of the polyolefins may be the same or different;
- a polyolefin (such as polypropylene)/CNC-PVOH blend;
- polyolefin (such as polypropylene)/CNC-PVOH blend/polymeric water vapor barrier (such as styrene, styrene-butadiene acrylic polymers and varnishes);
- a polyolefin (such as polypropylene)/CNC-PVOH blend/a polyolefin (such as polypropylene)- in such embodiments, each of the polyolefins may be the same or different;
- biodegradable plastic (such as polyhydroxy alkenoate, PHA)/CNC-PVOH blend;
- biodegradable plastic (such as PHA)/CNC-PVOH blend/polymeric water vapor barrier (such as styrene, styrene-butadiene acrylic polymers and varnishes); and
- biodegradable plastic (such as PHA)/CNC-PVOH formula/biodegradable plastic (such as PHA).

Following are specific properties:

### 1. A structure: Kraft paper / CNC-PVOH blend

The Kraft is a paper of a weight ranging from 30 to 50 g/m², the CNC-PVOH blend barrier layer having a weight ranging from 1 and 15 g/m² or from 3 and 6 g/m².

This multilayer is characterized by:
a. Oxygen transmission rate of < 1 cc/m²-day @ 50%RH, 23°C; or < 15 cc/m²-day @ 80% RH, 23°C;
b. Grease barrier of the structure according to TAPPI T 559 standard being: 12 or higher.

### 2. A multilayer structure: Kraft paper/CNC-PVOH blend/polymeric water vapor barrier (styrene-butadiene)

The Kraft having a weight of between 30 and 50 g/m², the CNC-PVOH blend layer having a weight of between 1 and 15 g/m² or between 3 and 6 g/m², and the polymeric water vapor barrier having a weight of between 3 and 20 g/m² or between 3 and 10 g/m².

This multilayer is characterized by:
a. Oxygen transmission rate of < 1 cc/m²-day @ 50%RH, 23°C; or < 15 cc/m²-day @ 80% RH, 23°C;
b. Grease barrier according to TAPPI T 559 standard being: 12 or higher;
c. Water-vapor transmission rate < 50 gr/m²-day @ 90% RH, 38°C;
d. Water sorption, according to COBB-60 test being at least 40 times better than a bare Kraft paper - 30-40 gr/m² for Kraft paper as compared to 0.1 - 0.7 gr/m² for the multilayer structure.

### 3. A multilayer structure: a polyolefin (such as polypropylene)/Kraft paper/CNC-PVOH blend/polymeric water vapor barrier/polyolefin (such as polypropylene).

The Kraft having a weight of between 30 and 50 g/m², the CNC-PVOH blend layer having a weight of between 1 and 15 g/m² or between 3 and 6 g/m², and the polymeric water vapor barrier having a weight of between 3 and 20 g/m² or between 3 and 10 g/m² and each of the polyolefin layers are of a thickness between 15 and 30 µm.

This multilayer is characterized by:
a. Oxygen transmission rate of < 1 cc/m²-day @ 50%RH, 23°C; or < 15 cc/m²-day @ 80% RH, 23°C;
b. Grease barrier according to TAPPI T 559 standard being: 12 or higher; The grease barrier remains effective after creasing and folding of the structure.
c. Water-vapor transmission rate of < 5 gr/m²-day @ 90% RH, 38°C
d. No water sorption to the structure.

### 4. A multilayer structure: a polyolefin (such as polypropylene)/Kraft paper/CNC-PVOH blend/a polyolefin (such as polypropylene).

The Kraft having a weight of between 30 and 50 g/m², the CNC-PVOH blend layer having a weight of between 1 and 15 g/m² or between 3 and 6 g/m², and each of the polyolefin layers are of a thickness between 15 and 30 µm.

This multilayer is characterized by:
a. Oxygen transmission rate of < 1 cc/m²-day @ 50%RH, 23°C; or < 15 cc/m²-day @ 80% RH, 23°C;
b. Grease barrier according to TAPPI T 559 standard being: 12 or higher; The grease barrier remains effective after creasing and folding of the structure.
c. Water-vapor transmission rate of < 5 gr/m²-day @ 90% RH, 38°C;
d. No water sorption to the structure.

In comparison to each of the above exemplary multilayers, a Kraft paper without barrier exhibited no oxygen barrier at all, the paper failed the grease test, and demonstrated no water or water-vapor barrier properties.

In some embodiments, layer A is a paperboard and layer B comprises a blend of CNC and PVOH at a ratio as defined, e.g., being between 1:2 and 1:40 CNC/PVOH. Non-limiting examples include:

### 5. A multilayer structure: Paperboard (PB)/ CNC-PVOH blend.

The PB has a weight of between 200 and 500 g/m², the barrier layer having a weight of between 1 and 15 g/m².

This multilayer is characterized by:
a. Oxygen transmission rate of < 1 cc/m²-day @ 50%RH, 23°C; or < 15 cc/m²-day @ 80% RH, 23°C;
b. Grease barrier according to TAPPI T 559 standard being: 12 or higher.

### 6. A multilayer structure: Paperboard/CNC-PVOH blend/polymeric water vapor barrier (such as styrene-butadiene).

The PB has a weight of between 200 and 500 g/m², the barrier layer having a weight of between 1 and 15 g/m², and the polymeric water vapor barrier has a weight of between 3 and 20 g/m².

This multilayer is characterized by:
a. Oxygen transmission rate of < 1 cc/m²-day @ 50%RH, 23°C; or < 15 cc/m²-day @ 80% RH, 23°C.
b. Grease barrier according to TAPPI T 559 standard being: 12 or higher; The grease barrier remains effective after creasing and folding of the structure.
c. Water-vapor transmission rate of < 50 gr/m²-day @ 90% RH, 38°C.
d. The water sorption, according to COBB-1800 test is at least 10 times better than bare paperboard- 70 - 90 gr/m² for paperboard as compared to 4 - 7 gr/m² for the multilayer structure.

### 7. A multilayer structure: a polyolefin (such as polypropylene)/Paperboard/CNC-PVOH blend/a polyolefin (such as polypropylene).

The PB has a weight of between 200 and 500 g/m², the barrier layer having a weight of between 1 and 15 g/m², and each of the polyolefin layers having a thickness between 15 and 30 µm.

This multilayer is characterized by:
a. Oxygen transmission rate of < 1 cc/m²-day @ 50%RH, 23°C; or < 5 cc/m²-day @ 80% RH, 23°C;
b. Grease barrier according to TAPPI T 559 standard being: 12 or higher;
c. Water-vapor transmission rate of < 5 gr/m²-day @ 90% RH, 38°C;
d. No water sorption to the structure.

Comparative studies on each of the above exemplary multilayers indicated that paperboard without the CNC/PVOH barrier layer exhibited no oxygen barrier at all, the paperboard failed the grease test, and demonstrated no water or water-vapor barrier properties.

### 8. A multilayer structure: a polyolefin (such as polypropylene)/Paperboard/a polyolefin (such as polyethylene)/CNC-PVOH blend/a polyolefin (such as polypropylene).

The PB has a weight of between 200 and 500 g/m², the barrier layer having a weight of between 1 and 15 g/m², the polyethylene having a weight of between 5 and 20 g/m² and each of the polyolefin layers having a thickness between 15 and 30 µm.

This multilayer is characterized by:
a. Oxygen transmission rate of < 1 cc/m²-day @ 50%RH, 23°C; or < 5 cc/m²-day @ 80% RH, 23°C;
b. Grease barrier according to TAPPI T 559 standard being: 12 or higher;
c. Water-vapor transmission rate of < 5 gr/m²-day @ 90% RH, 38°C;
d. No water sorption to the structure.

Paperboard without barrier demonstrated no oxygen barrier at all, it failed the grease test, and had no water or water-vapor barrier properties. When coated with a polyolefin, the paperboard still demonstrates no oxygen barrier properties.

### 9. A multilayer structure: a polyolefin (such as polypropylene)/CNC-PVOH blend.

The CNC-PVOH blend had a weight of between 3 and 10 g/m², the polyolefin layer had a thickness of between 15 and 30 µm.

This multilayer is characterized by:
a. Oxygen transmission rate of < 1 cc/m²-day @ 50%RH, 23°C; or < 15 cc/m²-day @ 80% RH, 23°C.

### 10. A multilayer structure: a polyolefin (such as polypropylene)/ CNC-PVOH blend/polymeric water vapor barrier (such as styrene-butadiene).

The CNC-PVOH blend had a weight of between 3 and 10 g/m², the polyolefin layer had a thickness of between 15 and 30 µm, and the polymeric water vapor barrier had a weight of between 3 and 20 g/m².

This multilayer is characterized by:
a. Oxygen transmission rate of < 1 cc/m²-day @ 50%RH, 23°C; or < 15 cc/m²-day @ 80% RH, 23°C.
b. Water-vapor transmission rate of < 5 gr/m²-day @ 90% RH, 38°C.

### 11. A multilayer structure: a polyolefin (such as polypropylene)/CNC-PVOH blend/a polyolefin (such as polypropylene).

The CNC-PVOH blend had a weight of between 3 and 10 g/m², the polyolefin layer had a thickness of between 15 and 30 µm.

This multilayer is characterized by:
a. Oxygen transmission rate of < 1 cc/m²-day @ 50%RH, 23°C; or < 15 cc/m²-day @ 80% RH, 23°C;
b. Water-vapor transmission rate of < 5 gr/m²-day @ 90% RH, 38°C.

As comparative experiments demonstrated, a polyolefin such as PP without barrier had no oxygen barrier properties at all.

### 12. A multilayer structure: biodegradable plastic (such as PHA)/CNC-PVOH blend.

The CNC-PVOH blend had a weight of between 3 and 10 g/m², the PHA layer has a thickness of between 25 and 200µm.

This multilayer is characterized by:
a. Oxygen transmission rate of < 1 cc/m²-day @ 50%RH, 23°C; or < 15 cc/m²-day @ 80% RH, 23°C.

### 13. A multilayer structure: biodegradable plastic (such as PHA)/CNC-PVOH blend/polymeric water vapor barrier (such as styrene-butadiene).

The CNC-PVOH blend had a weight of between 3 and 10 g/m², the PHA layer has a thickness of between 25 and 200µm, the polymeric water vapor barrier had a weight ranging between 3 and 20 g/m².

This multilayer is characterized by:
a. Oxygen transmission rate of < 1 cc/m²-day @ 50%RH, 23°C; or < 15 cc/m²-day @ 80% RH, 23°C;
b. Water-vapor transmission rate of < 40 gr/m²-day @ 90% RH, 38°C.

### 14. A multilayer structure: biodegradable plastic (such as PHA)/CNC-PVOH blend/biodegradable plastic (such as PHA).

The CNC-PVOH blend had a weight of between 3 and 10 g/m², the PHA layer has a thickness of between 25 and 200µm.

This multilayer is characterized by:
a. Oxygen transmission rate of < 1 cc/m²-day @ 50%RH, 23°C; or < 15 cc/m²-day @ 80% RH, 23°C;
b. Water-vapor transmission rate of < 200 gr/m²-day @ 90% RH, 38°C;

Comparative studies indicate that PHA without barrier has an oxygen barrier rate of > 50 cc/m²-day. The water-vapor barrier of PHA is not as good as that of non-bio plastics. The water-vapor transmission rate was reduced by 3-20 folds when PHA was coated with a polymeric water vapor barrier, as selected herein.

As indicated, multilayered structures of the invention have exhibited improved oxygen transmission rates, water-vapor transmission rates, grease and oil barrier capabilities as well as water sorptivity properties, just to name a few, as compared to multilayers of the art.

For example, improved oil barrier properties of multilayers comprising a CNC-PVOH blend layer over PVOH based layers or layers of water-vapor polymers, when coated on Kraft paper or a paperboard have been demonstrated:
1. Polymeric water vapor barriers, based on styrene-butadiene, acrylic emulsions, lacquer etc., coated on Kraft paper or paperboard at a coating weight of < 10 g/m² resulted in TAPPI T 559 standard rating < 8, which is not sufficient for packaging purposes. They are also not showing crease and fold resistance.
2. A PVOH layer at a coating weight of < 5 g/m² resulted in a maximum TAPPI T 559 standard rating of 10 and did not show crease resistance.
3. A PVOH layer at a coating weight of < 5 g/m², coated with a polymeric water vapor barrier at a coating weight of < 5 g/m² (total coating of < 10 g/m²), resulted in a maximum TAPPI T 559 standard rating of 11 and did not show crease resistance.
4. A CNC-PVOH layer at a coating weight of < 5 g/m² resulted in a TAPPI T 559 standard rating of 12 (or more) and did not show crease resistance.
5. A CNC-PVOH layer at a coating weight of < 5 g/m², coated with a polymeric water vapor barrier at a coating weight of < 5 g/m² (total coating of < 10 g/m²), provided a TAPPI T 559 standard rating of 12 (or more) and was fully crease resistant.

Thus, a CNC-PVOH layer in a multilayered structure of the invention, demonstrated improved properties acting as a barrier layer, and additionally demonstrated synergistic effect with polymeric water-vapor barrier layers, especially those based on acrylic emulsions or styrene-butadiene emulsions. The combination of the two layers led to the best oil/grease barrier capabilities, including resistance to creasing and folding, which is essential in the production of liquid and food packaging.

The invention thus provides:
A multilayered structure as defined in claim 1, which may herein also be referred to as an "article".

The following embodiments relate to any of the aspects disclosed herein as well as to any embodiments disclosed, in combination.

In some embodiments, the article is characterized by one of more of the following:
(1) a grease barrier of 12, as determined using TAPPI T 559 standard (approved by the Physical Properties Committee of the Process and Product Quality Division);
(2) an oxygen transmittance rate (OTR) of between 0.01 and 15 cc/m²-day, when measured at 80% relative humidity (RH), at 23°C; and/or
(3) a water vapor transmittance rate (WVTR) of between 0.01 and 20 gr/m²-day, when measured at 90% RH, at 38°C.

In some embodiments, the OTR is between 0.01 and 1 cc/m²-day, when measured at 80% relative humidity (RH), at 23°C.

In some embodiments, the OTR is between 0.01 and 5 cc/m²-day, when measured at 80% relative humidity (RH), at 23°C.

In some embodiments, the OTR is between 1 and 10 cc/m²-day, when measured at 80% relative humidity (RH), at 23°C.

In some embodiments, the OTR is between 1 and 5 cc/m²-day, when measured at 80% relative humidity (RH), at 23°C.

In some embodiments, the OTR is below 1 cc/m²-day, when measured at 80% relative humidity (RH), at 23°C.

In some embodiments, the WVTR is between 0.01 and 1 gr/m²-day, when measured at 90% RH, at 38°C.

In some embodiments, the WVTR is between 0.01 and 5 gr/m²-day, when measured at 90% RH, at 38°C.

In some embodiments, the WVTR is between 1 and 10 gr/m²-day, when measured at 90% RH, at 38°C.

In some embodiments, the WVTR is between 1 and 5 gr/m²-day, when measured at 90% RH, at 38°C.

In some embodiments, the WVTR is between 5 and 10 gr/m²-day, when measured at 90% RH, at 38°C.

In some embodiments, the WVTR is below 1 gr/m²-day, when measured at 90% RH, at 38°C.

In some embodiments, the article is biodegradable.

In some embodiments, the blend of CNC and PVOH is a mixture of CNC and PVOH at a ratio between 0.001:1 to 1:0.001 (CNC to PVOH).

In some embodiments, the ratio is 0.001:1, 0.01:1, 0.1:1, 1:1, 1:0.1, 1:0.01, 1:0.001 w/w, CNC:PVOH.

In some embodiemnts, said layer of CNC-PVOH blend further comprises at least one additional material selected from polyvinyl acetate (PVAc), ethylene vinyl alcohol (EVOH), polyvinyl pyrrolidone (PVP), starch, chitosan, poly acrylic acid (PAA), polyethyleneimine (PEI), carbohydrates, ethylene vinyl acetate (EVA), elastomers, isocyanates, polyurethanes and inert fillers.

In some embodiments, said layer of CNC-PVOH blend consists CNC and PVOH.

In some embodiments, in a structure ABC, layer B comprises a layer of CNC-PVOH blend and a layer of a cellulose nanomaterial selected from nanocrystals (CNC), microfibrillated cellulose (MFC), a combination of CNC and NFC, a combination of CNC and MFC, a blend of CNC with at least one water soluble or water dispersible additive, and a blend of CNC with one or more additional materials selected from polyvinyl alcohol (PVOH), polyvinyl acetate (PVAc), ethylene vinyl alcohol (EVOH), polyvinyl pyrrolidone (PVP), starch, chitosan, poly acrylic acid (PAA), polyethyleneimine (PEI), carbohydrates, ethylene vinyl acetate (EVA), elastomers, isocyanates, polyurethanes and inert fillers.

In some embodiments, any of the material layers comprises at least one additive selected from a polymer, a plasticizer, a surfactant, a particulate material (including nanoparticles and microparticles), a pigment, a carbohydrate, a salt, a conductive material, an oxygen scavenger, lignin and natural extracts.

In some embodiments, the layer CNC-PVOH comprises between 0.1wt% and 3wt% impurities of the total weight of the layer, wherein the impurities are selected from carbohydrates and salts.

In some embodiments, the article consists of a layer of a blend consisting of CNC and PVOH; a substrate layer and a cover layer.

In some embodiments, layer **A** is a paper or paper-based material.

In some embodiments, layer **A** is of a polymeric material, a polymer coated paper-based material, or a nanocellulose/polymer film.

In some embodiments, layer **A** is of a material selected from polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polyvinylidene chloride, starch, cellulose, polyhydroxyvalerate, polyhydroxyhexanoate, polyanhydrides, polyethylene terephthalate, polyvinyl chloride and polycarbonate.

In some embodiments, layer **A** is a polymer coated paperboard, wherein the polymer is selected from polyethylene, polypropylene, polyester, polyvinyl alcohol, ethylene vinyl alcohol, polyamide, polystyrene, polylactic acid, polyhydroxyalkanote, polycaprolactone, polyhydroxybutyrate, polyvinyl acetate, polyacrylonitrile, polybutylene succinate, polyvinylidene chloride, starch, cellulose, polyhydroxyvalerate, polyhydroxyhexanoate, polyanhydrides, polyethylene terephthalate, polyvinyl chloride and polycarbonate.

In some embodiments, layer **A** is of a biodegradable material selected from polyvinyl alcohol, polylactic acid, polyhydroxyalkanote, polycaprolactone, polyhydroxybutyrate, polyvinyl acetate, polybutylene succinate, starch, cellulose, polyhydroxyvalerate, polyhydroxyhexanoate, polyanhydrides, or any polymer blend of two or more of the aforementioned polymers.

In some embodiments, layer **A** is a biodegradable polymer coated paperboard, wherein the biodegradable polymer is selected from polyvinyl alcohol, polylactic acid, polyhydroxyalkanote, polycaprolactone, polyhydroxybutyrate, polyvinyl acetate, polybutylene succinate, starch, cellulose, polyhydroxyvalerate, polyhydroxyhexanoate, polyanhydrides, or any polymer blend of two or more of the aforementioned polymers.

In some embodiments, layer **A** is or comprises a fabric.

In some embodiments, layers **A** and **B** and/or layers **B and C** are associated with each other directly or separated by an interface material selected from primer material and an adhesive material.

In some embodiments, the multilayered structure is of a form selected from **AABCC, ABCC, AABC,** wherein each of **A, B** and **C** are as defined in claim 1.

In some embodiments, the article is used in packaging of goods, foods, liquids, and pharmaceuticals.

In some embodiments, the article comprises a substrate of paper or paper based material and a layer of CNC-PVOH blend.

In some embodiments, the article comprises 3 layers: a substrate of a paper or paper based material, a layer of CNC-PVOH blend and a layer of a polymeric water vapor barrier material, wherein the polymeric water vapor barrier material is a varnish.

In some embodiments, the article comprises 5 layers: a layer of a polyolefin, a layer of a paper or paper-based material, a layer of CNC-PVOH blend, a layer of a polymeric water vapor barrier material and a further layer of a polyolefin. Disclosed herein for reference is an article which comprises 4 layers: a layer of a polyolefin, a layer of a paper or paper-based material, a layer of CNC-PVOH blend and a further layer of a polyolefin.

In some embodiments, the article comprises a paperboard and a layer of CNC-PVOH blend.

In some embodiments, the article comprises 3 layers: a paperboard a layer of CNC-PVOH blend and a layer of a polymeric water vapor barrier material, wherein the polymeric water vapor barrier material is a varnish. Disclosed herein for reference is an article which comprises 4 layers: a layer of a polyolefin, a paperboard, a layer of CNC-PVOH blend and a further layer of a polyolefin. Disclosed herein for reference is an article which comprises 5 layers: a layer of a polyolefin, a paperboard, a second layer of a polyolefin, a layer of CNC-PVOH blend and a further layer of a polyolefin.

In some embodiments, the article comprises a layer of a polyolefin and a layer of CNC-PVOH blend.

In some embodiments, the article comprises 3 layers: a layer of a polyolefin, a layer of CNC-PVOH blend and a layer of a polymeric water vapor barrier material, wherein the polymeric water vapor barrier material is a varnish. Disclosed herein for reference is an article which comprises 3 layers: a layer of a polyolefin, a layer of CNC-PVOH blend and a further layer of a polyolefin.

In some embodiments, the article comprises a layer of a biodegradable plastic material and a layer of CNC-PVOH blend.

In some embodiments, the article comprises 3 layers: a layer of a biodegradable plastic material, a layer of CNC-PVOH blend and a layer of a polymeric water vapor barrier material, wherein the polymeric water vapor barrier material is a varnish.

Disclosed herein for reference is an article which comprises 3 layers: a layer of a biodegradable plastic material, a layer of CNC-PVOH blend and a further layer of a biodegradable plastic material.

Disclosed herein for reference is an article which comprises 3 layers: a paperboard, a layer of CNC-PVOH blend and a layer of a biodegradable plastic.

Disclosed herein for reference is an article which comprises 4 layers: a layer of a biodegradable plastic, paperboard, a layer of CNC-PVOH blend and a further layer of a biodegradable plastic.

Disclosed herein for reference is an article which comprises 5 layers: a layer of a biodegradable plastic, paperboard, a second layer of a biodegradable plastic, a layer of CNC-PVOH blend and a further layer of a biodegradable plastic.

In some embodiments, the paper or paper-based material is Kraft paper or paperboard.

In some embodiments, the paper or paper-based material is Kraft paper.

A polymeric water vapor barrier material disclosed for reference is styrene or styrene-butadiene.

In some embodiments, the polyolefin is selected from polypropylene and polyethylene.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** depicts an exemplary multilayered structure according to the invention.
**Fig. 2** depicts another exemplary multilayered structure according to the invention.
**Figs. 3A-D** depict different embodiments of another exemplary multilayered structure according to the invention.

### DETAILED DESCRIPTION OF EMBODIMENTS

In addition to the examples provided above, the following examples should be considered. Examples 1, 2 and 3 are for reference in as far as layer C is not of a varnish. Example 1: a 3-layered structure:
**Layer A:** low density polyethylene (LDPE) - 20 µm, treated with Corona
**Layer B:** a layer of PVOH/CNC - 5 g/m²
**Layer C:** low density polyethylene (LDPE) - 20 µm, treated with Corona and coated on the treated side with an adhesive

The multilayer includes Layer **A**/ Layer **B**/ Layer **C**

### Preparation method:

1. LDPE film (Layer **A**) was surface treated with corona;
2. PVOH/CNC water suspension was coated on the treated surface of the LDPE, followed by complete drying (Layer **B**);
3. Corona treated LDPE film coated with an adhesive layer and laminated to Layer B, with the adhesive coated side facing the PVOH/CNC layer (Layer **C**).

The multilayer structure was transparent, flexible and could be further laminated to include additional layers for the production of flexible or rigid packages with good barrier capabilities. The LDPE layers provided water, water vapor and oil barrier capabilities. The PVOH/CNC inner layer provided gas barrier capabilities.

### Example 2: a multilayer structure (3 layers):

**Layer A:** polypropylene - 30 µm, coated with a hot-melt adhesive (e.g. ethylene vinyl acetate) layer
**Layer B:** a layer of PVOH/CNC - 5 g/m²
**Layer C:** polypropylene - 30 µm, coated with a hot-melt adhesive (e.g. ethylene vinyl acetate) layer

The multilayer includes Layer A/ Layer B/ Layer C

### Preparation method:

1. Polypropylene film (Layer A) is coated with a hot-melt adhesive (e.g. ethylene vinyl acetate)
2. PVOH/CNC water suspension is coated on the hot-melt layer, followed by complete drying (Layer B)
3. Polypropylene film, coated with a hot-melt layer is laminated to Layer B, with the adhesive coated side facing the PVOH/CNC layer (Layer C)

The multilayer structure is transparent, flexible, and can be further laminated to more layers for the production of flexible or rigid packages with good barrier capabilities. The Polypropylene layers give water, water vapor and oil barrier capabilities. The PVOH/CNC inner layer gives gas barrier capabilities and improves mechanical properties.

Mechanical properties of the layered structures described in Example 2 were tested by tensile tests, using an Instron machine:
- Elastic modulus is improved by 40%-125% compared to reference of layers A and C laminated together.
- Elongation at break is improved by 7-20% compared to reference of layers A and C laminated together.

### Example 3: a 5-layer structure:

**Layer A1:** low density polyethylene (LDPE) - 20 µm
**Layer A2:** paperboard, coated with LDPE
**Layer A3:** low density polyethylene (LDPE) - 15 µm, treated with corona
**Layer B:** a layer of PVOH/CNC - 4 g/m²
**Layer C1:** low density polyethylene (LDPE) - 15 µm, treated with corona
**Layer C2:** low density polyethylene (LDPE)

The multilayer includes Layer **A1**/ Layer **A2**/ Layer **B**/ Layer **C1**/ Layer **C2**

### Preparation method:

1. LDPE film (Layer **A3**) was surface treated with corona;
2. PVOH/CNC water suspension was coated on the treated surface of the LDPE, followed by complete drying (Layer **B**);
3. Corona treated LDPE film was laminated to Layer **B**, with the corona treated side facing the PVOH/CNC layer (Layer **C1**);
4. LDPE was extruded onto the surface of a paperboard (layer **A2**);
5. LDPE was extruded from the other side of the paperboard (layer **A1**);
6. The multilayer of layers **A3/B/C1** was laminated to Layer **A2**;
7. LDPE was extruded onto Layer **C1** (layer **C2**).

This multilayer structure may be used for rigid packages. The paperboard layer gave mechanical stability, the LDPE layers gave water, water vapor and oil barrier capabilities. The PVOH/CNC inner layer gave gas barrier capabilities:
- This structure with Layer B having a barrier layer of ~1.2 g/m²had OTR-4 at 80%RH
- This structure with Layer B having a barrier layer of -2.4 g/m²had OTR-2 at 80%RH
- This structure with Layer B having a barrier layer of ~4 g/m²had OTR-1 at 80%RH
- This structure with Layer B having a barrier layer of ~5 g/m²had OTR<1 at 80%RH.

## Claims

1. A multilayered structure being free of metallic layers and consisting between 3 and 7 material layers, the multilayered structure being of the form ABC, wherein each of A, B and C designate a single layer ortwo or more layers of a material:
Layer A is a substrate comprising a material selected from a polymeric material, a paper or paper-based material, a polymer coated paper-based material, a nanocellulose film, nanocellulose/polymer film, a fabric material, a porous material, a membrane material, and a mineral material;
Layer B is a layer of a blend of cellulose nanocrystals and polyvinyl alcohol (CNC-PVOH blend), optionally comprising at least one additional material, wherein the layer B has a thickness of between 1 µm and 20 µm; and
Layer C is a cover layer made of a varnish.

2. The multilayered structure according to claim 1, wherein the varnish layer is of a varnish composition comprising a material selected from a resin; latex; and oil.

3. The multilayered structure according to claim 1, wherein the varnish layer is of a varnish composition comprising a polymer selected from a polyurethane, an acrylic, an epoxy, and a polyester.

4. The multilayered structure according to claim 2, wherein the resin is a phenolic resin, an alkyd resin, or a polyurethane resin.

5. The multilayered structure according to claim 1, wherein the latex is styrene, styrene-butadiene, or natural latex.

6. The multilayered structure according to claim 1, wherein the oil is linseed oil, walnut oil, tung oil or soybean oil.

7. The multilayered structure according to claim 1, **characterized by** one of more of the following:
(1) a grease barrier of 12, as determined using TAPPI T 559 standard;
(2) an oxygen transmittance rate (OTR) of between 0.01 and 15 cc/m²-day, when measured at 80% relative humidity (RH), at 23°C; and/or
(3) a water vapor transmittance rate (WVTR) of between 0.01 and 20 gr/m²-day, when measured at 90% RH, at 38°C.

8. The multilayered structure according to claim 7, wherein the OTR is between 0.01 and 1 cc/m²-day, when measured at 80% relative humidity (RH), at 23°C; or wherein the OTR is between 0.01 and 5 cc/m²-day, when measured at 80% relative humidity (RH), at 23°C; or wherein the OTR is between 1 and 10 cc/m²-day, when measured at 80% relative humidity (RH), at 23°C; or wherein the OTR is between 1 and 5 cc/m²-day, when measured at 80% relative humidity (RH), at 23°C; or **characterized by** an OTR below 1 cc/m²-day, when measured at 80% relative humidity (RH), at 23°C.

9. The multilayered structure according to claim 7, wherein the WVTR is between 0.01 and 1 gr/m²-day, when measured at 90% RH, at 38°C; or wherein the WVTR is between 0.01 and 5 gr/m²-day, when measured at 90% RH, at 38°C; or wherein the WVTR is between 1 and 10 gr/m²-day, when measured at 90% RH, at 38°C; or wherein the WVTR is between 1 and 5 gr/m²-day, when measured at 90% RH, at 38°C; or wherein the WVTR is between 5 and 10 gr/m²-day, when measured at 90% RH, at 38°C; or **characterized by** a WVTR below 1 gr/m²-day, when measured at 90% RH, at 38°C.

10. The multilayered structure according to claim 1, being biodegradable.

11. The multilayered structure according to any one of the preceding claims, wherein the blend of CNC and PVOH is a mixture of CNC and PVOH at a ratio between 0.001:1 to 1:0.001 (CNC to PVOH).

12. The multilayered structure according to claim 1, wherein said layer of CNC-PVOH blend further comprises at least one additional material selected from polyvinyl acetate (PVAc), ethylene vinyl alcohol (EVOH), polyvinyl pyrrolidone (PVP), starch, chitosan, poly acrylic acid (PAA), polyethyleneimine (PEI), carbohydrates, ethylene vinyl acetate (EVA), elastomers, isocyanates, polyurethanes and inert fillers.

13. The multilayered structure according to claim 1, wherein said layer of CNC-PVOH blend consists CNC and PVOH.

14. The multilayered structure according to claim 1, selected from an article comprising 3 layers: a substrate of a paper or paper based material, a layer of CNC-PVOH blend and a layer of a polymeric water vapor barrier material; an article comprising 5 layers: a layer of a polyolefin, a layer of a paper or paper-based material, a layer of CNC-PVOH blend, a layer of a polymeric water vapor barrier material and a further layer of a polyolefin; an article comprising 3 layers: a paperboard,a layer of CNC-PVOH blend and a layer of a polymeric water vapor barrier material; an article comprising 3 layers: a layer of a polyolefin, a layer of CNC-PVOH blend and a layer of a polymeric water vapor barrier material; an article comprising 3 layers: a layer of a biodegradable plastic material, a layer of CNC-PVOH blend and a layer of a polymeric water vapor barrier material.

15. The multilayered structure according to claim 1, having the structure ABC1C2 wherein material layer A is different from each of material layers C1 and C2, and each of material layers C1 and C2 are also different from each other.

## Patentansprüche

1. Eine mehrschichtige Struktur, die frei von metallischen Schichten ist und aus zwischen 3 und 7 Materialschichten besteht, wobei die mehrschichtige Struktur die Form ABC aufweist, wobei jedes von A, B und C eine einzelne Schicht oder zwei oder mehrere Schichten eines Materials bezeichnet:
Schicht A ist ein Substrat, das ein Material umfasst, das aus einem polymeren Material, einem Papier oder einem Material auf Papierbasis, einem polymerbeschichteten Material auf Papierbasis, einem Nanocellulosefilm, einem Nanocellulose-/Polymerfilm, einem Gewebematerial, einem porösen Material, einem Membranmaterial und einem mineralischen Material ausgewählt ist;
Schicht B ist eine Schicht eines Gemischs aus Cellulose-Nanokristallen und Polyvinylalkohol (CNC-PVOH-Gemisch), die gegebenenfalls mindestens ein zusätzliches Material umfasst, wobei die Schicht B eine Dicke zwischen 1 µm und 20 µm aufweist; und
Schicht C ist eine Deckschicht aus einem Lack.

2. Die mehrschichtige Struktur nach Anspruch 1, wobei die Lackschicht aus einer Lackzusammensetzung besteht, die ein Material umfasst, das aus einem Harz; Latex; und Öl ausgewählt ist.

3. Die mehrschichtige Struktur nach Anspruch 1, wobei die Lackschicht aus einer Lackzusammensetzung besteht, die ein Polymer umfasst, das aus einem Polyurethan, einem Acryl, einem Epoxid und einem Polyester ausgewählt ist.

4. Die mehrschichtige Struktur nach Anspruch 2, wobei das Harz ein Phenolharz, ein Alkydharz oder ein Polyurethanharz ist.

5. Die mehrschichtige Struktur nach Anspruch 1, wobei der Latex Styrol, Styrol-Butadien oder Naturlatex ist.

6. Die mehrschichtige Struktur nach Anspruch 1, wobei das Öl Leinöl, Walnussöl, Tungöl oder Sojaöl ist.

7. Die mehrschichtige Struktur nach Anspruch 1, **gekennzeichnet durch** eines oder mehrere der folgenden:
(1) eine Fettsperre von 12, bestimmt unter Verwendung der Norm TAPPI T 559;
(2) eine Sauerstoffdurchlässigkeitsrate (OTR) zwischen 0,01 und 15 cm³/m²-Tag, gemessen bei 80% relativer Feuchte (RH) bei 23°C; und/oder
(3) eine Wasserdampfdurchlässigkeitsrate (WVTR) zwischen 0,01 und 20 g/m²-Tag, gemessen bei 90% relativer Feuchte (RH) bei 38°C.

8. Die mehrschichtige Struktur nach Anspruch 7, wobei die OTR zwischen 0,01 und 1 cm³/m²-Tag, gemessen bei 80% relativer Feuchte (RH) bei 23°C, liegt; oder wobei die OTR zwischen 0,01 und 5 cm³/m²-Tag, gemessen bei 80% relativer Feuchte (RH) bei 23°C, liegt; oder wobei die OTR zwischen 1 und 10 cm³/m²-Tag, gemessen bei 80% relativer Feuchte (RH) bei 23°C, liegt; oder wobei die OTR zwischen 1 und 5 cm³/m²-Tag, gemessen bei 80% relativer Feuchte (RH) bei 23°C, liegt; oder **gekennzeichnet durch** eine OTR unter 1 cm³/m²-Tag, gemessen bei 80% relativer Feuchte (RH) bei 23°C.

9. Die mehrschichtige Struktur nach Anspruch 7, wobei die WVTR zwischen 0,01 und 1 g/m²-Tag, gemessen bei 90% relativer Feuchte (RH) bei 38°C, liegt; oder wobei die WVTR zwischen 0,01 und 5 g/m²-Tag, gemessen bei 90% RH bei 38°C, liegt; oder wobei die WVTR zwischen 1 und 10 g/m²-Tag, gemessen bei 90% RH bei 38°C, liegt; oder wobei die WVTR zwischen 1 und 5 g/m²-Tag, gemessen bei 90% RH bei 38°C, liegt; oder wobei die WVTR zwischen 5 und 10 g/m²-Tag, gemessen bei 90% RH bei 38°C, liegt; oder **gekennzeichnet durch** eine WVTR unter 1 g/m²-Tag, gemessen bei 90% RH bei 38°C.

10. Die mehrschichtige Struktur nach Anspruch 1, welche biologisch abbaubar ist.

11. Die mehrschichtige Struktur nach einem der vorhergehenden Ansprüche, wobei das Gemisch aus CNC und PVOH ein Gemisch aus CNC und PVOH in einem Verhältnis zwischen 0,001:1 bis 1:0,001 (CNC zu PVOH) ist.

12. Die mehrschichtige Struktur nach Anspruch 1, wobei die Schicht aus CNC-PVOH-Gemisch ferner mindestens ein zusätzliches Material umfasst, das aus Polyvinylacetat (PVAc), Ethylenvinylalkohol (EVOH), Polyvinylpyrrolidon (PVP), Stärke, Chitosan, Polyacrylsäure (PAA), Polyethylenimin (PEI), Kohlenhydraten, Ethylenvinylacetat (EVA), Elastomeren, Isocyanaten, Polyurethanen und inerten Füllstoffen ausgewählt ist.

13. Die mehrschichtige Struktur nach Anspruch 1, wobei die Schicht aus CNC-PVOH-Gemisch aus CNC und PVOH besteht.

14. Die mehrschichtige Struktur nach Anspruch 1, ausgewählt aus einem Gegenstand, der 3 Schichten umfasst: ein Substrat aus einem Papier oder einem Material auf Papierbasis, eine Schicht aus einem CNC-PVOH-Gemisch und eine Schicht aus einem polymeren Wasserdampfsperrmaterial; einem Gegenstand, der 5 Schichten umfasst: eine Schicht aus einem Polyolefin, eine Schicht aus einem Papier oder einem Material auf Papierbasis, eine Schicht aus einem CNC-PVOH-Gemisch, eine Schicht aus einem polymeren Wasserdampfsperrmaterial und eine weitere Schicht aus einem Polyolefin; einem Gegenstand, der 3 Schichten umfasst: einen Karton, eine Schicht aus einem CNC-PVOH-Gemisch und eine Schicht aus einem polymeren Wasserdampfsperrmaterial; einem Gegenstand, der 3 Schichten umfasst: eine Schicht aus einem Polyolefin, eine Schicht aus einem CNC-PVOH-Gemisch und eine Schicht aus einem polymeren Wasserdampfsperrmaterial; einem Gegenstand, der 3 Schichten umfasst: eine Schicht aus einem biologisch abbaubaren Kunststoffmaterial, eine Schicht aus einem CNC-PVOH-Gemisch und eine Schicht aus einem polymeren Wasserdampfsperrmaterial.

15. Die mehrschichtige Struktur nach Anspruch 1 mit der Struktur ABC1C2, wobei die Materialschicht A von jeder der Materialschichten C1 und C2 verschieden ist und jede der Materialschichten C1 und C2 auch voneinander verschieden sind.

## Revendications

1. Structure multicouche qui est exempte de couches métalliques et constituée d'entre 3 et 7 couches de matériau, la structure multicouche étant sous la forme ABC dans laquelle chacun de A, B et C désigne une seule couche ou deux ou plus de deux couches d'un matériau :
la couche A est un substrat comprenant un matériau choisi parmi un matériau polymère, un matériau en papier ou à base de papier, un matériau à base de papier revêtu de polymère, un film de nanocellulose, un film de nanocellulose/polymère, un matériau d'étoffe, un matériau poreux, un matériau de membrane, et un matériau minéral ;
la couche B est une couche en un mélange de nanocristaux de cellulose et de poly(alcool vinylique) (mélange CNC-PVOH), comprenant éventuellement au moins un matériau additionnel, laquelle couche B a une épaisseur comprise entre 1 µm et 20 µm ; et
la couche C est une couche de recouvrement faite d'un vernis.

2. Structure multicouche selon la revendication 1, dans laquelle la couche de vernis est en une composition de vernis comprenant un matériau choisi parmi une résine ; un latex ; et une huile.

3. Structure multicouche selon la revendication 1, dans laquelle la couche de vernis est en une composition de vernis comprenant un polymère choisi parmi un polyuréthane, un acrylique, un époxy, et un polyester.

4. Structure multicouche selon la revendication 2, dans laquelle la résine est une résine phénolique, une résine alkyde, ou une résine de polyuréthane.

5. Structure multicouche selon la revendication 1, dans laquelle le latex est un latex de styrène, de styrène-butadiène, ou naturel.

6. Structure multicouche selon la revendication 1, dans laquelle l'huile est l'huile de lin, l'huile de noix, l'huile de tung ou l'huile de soja.

7. Structure multicouche selon la revendication 1, **caractérisée par** un ou plusieurs des suivants :
(1) une barrière aux graisses de 12, telle que déterminée au moyen de la norme TAPPI T 559 ;
(2) un taux de perméabilité à l'oxygène (OTR) compris entre 0,01 et 15 cm³/m²-jour, quand il est mesuré à 23 °C sous une humidité relative (HR) de 80 % ; et/ou
(3) un taux de perméabilité à la vapeur d'eau (WVTR) compris entre 0,01 et 20 g/m²-jour, quand il est mesuré à 38 °C sous une RH de 90 %.

8. Structure multicouche selon la revendication 7, dans laquelle l'OTR est compris entre 0,01 et 1 cm³/m²-jour, quand il est mesuré à 23 °C sous une humidité relative (HR) de 80 % ; ou dans laquelle l'OTR est compris entre 0,01 et 5 cm³/m²-jour, quand il est mesuré à 23 °C sous une humidité relative (HR) de 80 % ; ou dans laquelle l'OTR est compris entre 1 et 10 cm³/m²-jour, quand il est mesuré à 23 °C sous une humidité relative (HR) de 80 % ; ou dans lequel l'OTR est compris entre 1 et 5 cm³/m²-jour, quand il est mesuré à 23 °C sous une humidité relative (HR) de 80 % ; ou **caractérisée par** un OTR inférieur à 1 cm³/m²-jour, quand il est mesuré à 23 °C sous une humidité relative (HR) de 80 %.

9. Structure multicouche selon la revendication 7, dans laquelle le WVTR est compris entre 0,01 et 1 g/m²-jour, quand il est mesuré à 38 °C sous une RH de 90 % ; ou dans laquelle le WVTR est compris entre 0,01 et 5 g/m²-jour, quand il est mesuré à 38 °C sous une RH de 90 % ; ou dans laquelle le WVTR est compris entre 1 et 10 g/m²-jour, quand il est mesuré à 38 °C sous une RH de 90 % ; ou dans laquelle le WVTR est compris entre 1 et 5 g/m²-jour, quand il est mesuré à 38 °C sous une RH de 90 % ; ou dans laquelle le WVTR est compris entre 5 et 10 g/m²-jour, quand il est mesuré à 38 °C sous une RH de 90 % ; ou **caractérisée par** un WVTR inférieur à 1 g/m²-jour, quand il est mesuré à 38 °C sous une RH de 90 %.

10. Structure multicouche selon la revendication 1, qui est biodégradable.

11. Structure multicouche selon l'une quelconque des revendications précédentes, dans laquelle le mélange de CNC et de PVOH est un mélange de CNC et de PVOH en un rapport (des CNC au PVOH) compris entre 0,001/1 et 1/0,001.

12. Structure multicouche selon la revendication 1, dans laquelle ladite couche en mélange de CNC-PVOH comprend en outre au moins un matériau additionnel choisi parmi le poly(acétate de vinyle) (PVAc), l'éthylène-alcool vinylique (EVOH), la polyvinylpyrrolidone (PVP), l'amidon, le chitosane, le poly(acide acrylique) (PAA), la polyéthylène-imine (PEI), les hydrates de carbone, l'éthylène-acétate de vinyle (EVA), les élastomères, les isocyanates, les polyuréthanes et les charges inertes.

13. Structure multicouche selon la revendication 1, dans laquelle ladite couche en mélange de CNC-PVOH consiste en CNC et PVOH.

14. Structure multicouche selon la revendication 1, choisie parmi un article comprenant 3 couches : un substrat en un matériau en papier ou à base de papier, une couche en mélange de CNC-PVOH et une couche en un matériau polymère formant barrière à la vapeur d'eau ; un article comprenant 5 couches ; une couche en une polyoléfine, une couche en un matériau en papier ou à base de papier, une couche en mélange de CNC-PVOH, une couche en un matériau polymère formant barrière à la vapeur d'eau et une autre couche en une polyoléfine ; un article comprenant 3 couches : un carton, une couche en mélange de CNC-PVOH et une couche en un matériau polymère formant barrière à la vapeur d'eau ; un article comprenant 3 couches : une couche en une polyoléfine ; une couche en mélange de CNC-PVOH et une couche en un matériau polymère formant barrière à la vapeur d'eau ; un article comprenant 3 couches : une couche en une matière plastique biodégradable, une couche en mélange de CNC-PVOH et une couche en un matériau polymère formant barrière à la vapeur d'eau.

15. Structure multicouche selon la revendication 1, ayant la structure ABC1C2 dans laquelle la couche de matériau A est différente de chacune des couches de matériau C1 et C2, et chacune des couches de matériau C1 et C2 est aussi différente de l'autre.
